# EUROPEAN PATENT APPLICATION

(11) **EP 4 741 142 A1**
(43) Date of publication of application: **13.05.2026**
(21) Application number: 25215221.0
(22) Date of filing: 12.11.2025
(51) Int. Cl.: B29C 70/44, B29C 70/56, B29C 70/54

(54) **MOLD ASSEMBLY FOR A VACUUM FORMING PROCESS AND A METHOD OF ELONGATING MEMBRANES OF THE MOLD ASSEMBLY**

(30) Priority: 12.11.2024 US 202463719206 P; 20.06.2025 US 202519244670
(71) Applicant: The Boeing Company, Arlington, VA 22202 (US)
(72) Inventor: SERENCSITS, William Louis, ARLINGTON, 22202 (US); FRY, Jessica Offutt, ARLINGTON, 22202 (US); PETERS, Brian Timothy, ARLINGTON, 22202 (US)
(74) Representative: Plasseraud IP

(57) **Abstract**

A mold assembly for a vacuum forming process and a method of elongating membranes of the mold assembly for the vacuum forming process. A permeable layer is disposed across a surface of a mold body such that the permeable layer overlaps a groove defined in the surface of the mold body. Membranes are disposed across the permeable layer and the mold body. A vacuum is activated to expel a gaseous fluid out of a space between the mold body and one of the membranes which creates compaction pressure during compaction that causes the membranes to elongate and transform the composite blank material into the composite preform. A pump is activated to inject a flow of fluid between the permeable layer and one of the membranes via the groove to control the compaction pressure during elongation of the membranes as the gaseous fluid is expelled out of the space.

## Description

### CROSS-REFERENCE

This Patent Application claims priority to U.S. Provisional Patent Application No. 63/719206, filed on November 12, 2024, and entitled "MOLD ASSEMBLY FOR A VACUUM FORMING PROCESS AND A METHOD OF ELONGATING MEMBRANES OF THE MOLD ASSEMBLY."

### BACKGROUND

Current forming processes for composite materials may utilize deformable membranes and a vacuum to form a full stack of material at once. To form complex configurations using composite materials, some composite materials have small segments of fiber material that are hand laid such that the fiber direction does not deviate from a set standard amount. This process may be time consuming. Furthermore, due to the complex geometry to be achieved during the forming process, the deformable membranes may not be able to elongate to the required length. Therefore, to assist in elongating the deformable membranes, lubricants or surface treatments may be implemented, but this may cause contamination of the environment.

### SUMMARY

Therefore, it is desirable to develop a mold assembly and a method that improves manufacturing processes of elongating membranes for forming a composite preform, and other benefits are discussed herein.

The present disclosure pertains to a method of elongating membranes of a mold assembly for a vacuum forming process, as defined in the appended independent claim 1.

The present disclosure also pertains to a mold assembly for a vacuum forming process that transforms a composite blank material into a composite preform, as defined in the appended independent claim 12.

The detailed description and the drawings or FIGS. are supportive and descriptive of the disclosure, but the claim scope of the disclosure is defined solely by the claims. While some of the best modes and other configurations for carrying out the claims have been described in detail, various alternative designs and configurations exist for practicing the disclosure defined in the appended claims.

### BRIEF DESCRIPTION OF THE DRAWINGS

FIG. 1 is a schematic perspective view of a mold assembly including a permeable layer and a groove disposed under the permeable layer relative to the view.
FIG. 2 is a schematic enlarged fragmented view of a surface of a mold body defining a groove and the permeable layer disposed over the groove.
FIG. 3 is a schematic fragmented view of a component blank material disposed between membranes prior to elongation.
FIG. 4 is a schematic fragmented view of the component blank material disposed between the membranes during elongation, in which a pump is activated to inject a flow of fluid into a space via the groove.
FIG. 5 is a schematic illustration of the membranes fully elongated and transforming the composite blank material into the composite preform with at least one radii.

The present disclosure may be extended to modifications and alternative forms, with representative configurations shown by way of example in the drawings and described in detail below. Inventive aspects of the disclosure are not limited to the disclosed configurations. Rather, the present disclosure is intended to cover modifications, equivalents, combinations, and alternatives falling within the scope of the disclosure as defined by the appended claims.

### DETAILED DESCRIPTION

Those having ordinary skill in the art will recognize that all directional references (e.g., above, below, upward, up, downward, down, top, bottom, left, right, vertical, horizontal, etc.) are used descriptively for the FIGS. to aid the reader's understanding, and do not represent limitations (for example, to the position, orientation, or use, etc.) on the scope of the disclosure, as defined by the appended claims. Moreover, terms such as "first," "second," "third," and so on, may be used to describe separate components. Such terminology may include the words specifically mentioned above, derivatives thereof, and words of similar import. Furthermore, the term "substantially" can refer to a slight imprecision or slight variance of a condition, quantity, value, or dimension, etc., some of which are within manufacturing variance or tolerance ranges.

As used herein, an element or step recited in the singular and preceded by the word "a" or "an" should be understood as not necessarily excluding the plural of the elements or steps. That is, "a", "an", "the", "at least one", and "one or more" are used interchangeably to indicate that at least one of the items is present and more than one may be present, unless stated otherwise. Further, any reference to "one configuration" is not intended to be interpreted as excluding the existence of additional configurations that also incorporate the recited features. Moreover, unless explicitly stated to the contrary, configurations "comprising" or "having" an element or a plurality of elements having a particular property may include additional elements not having that property. The phrase "at least one of" as used herein should be construed to include the non-exclusive logical "or", i.e., A and/or B and so on depending on the number of components.

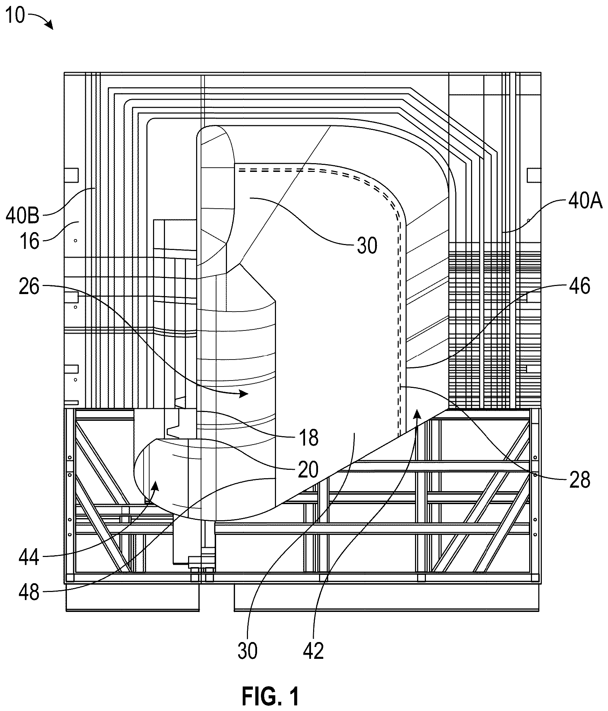

Referring to the figures, wherein like numerals indicate like or corresponding parts throughout the several views, a mold assembly 10 for a vacuum forming process is generally shown in FIG. 1. The mold assembly 10 is configured to transform a composite blank material 12 into a composite preform 14. The mold assembly 10 described herein is implemented to form complex composite preforms 14 which require significant membrane elongation.

The mold assembly 10 includes a mold body 16 presenting features to form various profiles 18, 20 of the composite preform 14. Depending on the desired final configuration of the formed composite preform 14, the mold body 16 may be configured with one or more contour profiles 18, 20 in which the composite blank material 12 is molded around in order to form corresponding contour profiles of the final composite preform 14. For example, the contour profiles 18, 20 of the mold body 16 are implemented to form complex composite preforms 14. Non-limiting examples of complex composite preforms 14 are C-shaped channels, Z-shaped channels, J-shaped channels, U-shaped channels, I-shaped channels, any suitable curved-shaped channels, or any other suitable shapes, etc.

The composite preform 14 may be any suitable configuration depending on the application. For example, the composite preform 14 may be configured as parts of an aircraft, a vehicle, a locomotive, a watercraft, a robot, farm equipment, or any other parts of a movable platform, whether autonomous or non-autonomous. As one example, if the composite preform 14 is for an aircraft application, the composite preform 14 may be for stringers, fuselage skins, stabilizers, wings, frames, spars, door components, etc. As other examples, the composite preform 14 may be configured as parts of a stationary platform, and non-limiting examples of a stationary platform may include farm equipment, buildings, generators, power grid equipment, or any other stationary platform.

Generally, the composite blank material 12/the composite preform 14 may include reinforced fibers. For example, the reinforced fibers may be a dry fiber material. The reinforced fibers may include carbon, glass, or any other suitable dry fiber. The dry fibers may be infused into a resin to form the composite blank material 12/the composite preform 14. Alternatively, the composite blank material 12/the composite preform 14 may include pre-impregnated fibers in a polymer resin, i.e., a prepreg.

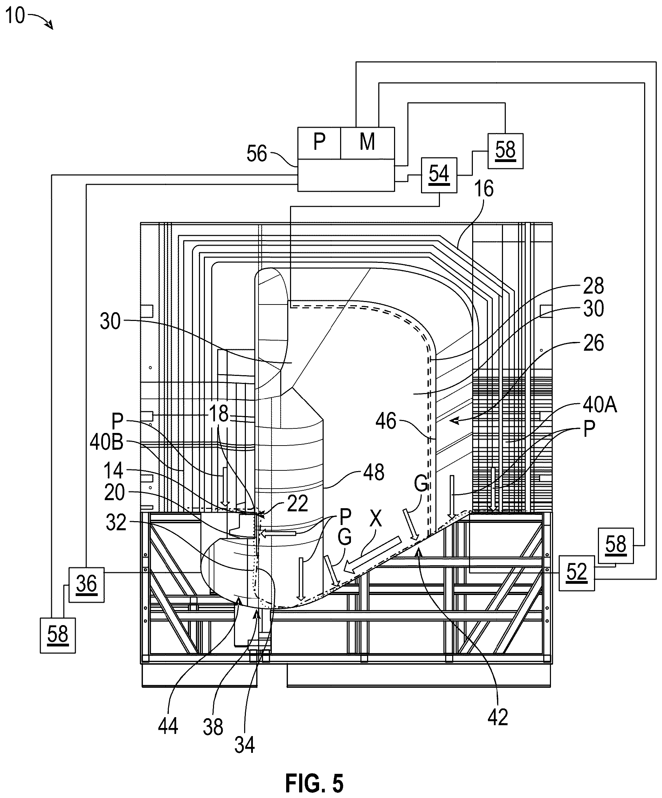

For example, the mold body 16 may include a first contour profile 18 to form a first radius 22 (see FIG. 5) of the composite preform 14 and, optionally, may include a second contour profile 20 to form a second radius of the composite preform 14. In certain configurations, the first contour profile 18 and the second contour profile 20 are spaced from each other. However, it is to be appreciated that the first contour profile 18, the second contour profile 20, and any other contour profile may be any suitable location along the mold body 16 to correspondingly form the desired radius 22 along the composite preform 14. Therefore, transformation of the composite blank material 12 into the composite preform 14 forms at least one radius 22 relative to one or more contour profiles 18, 20 of the mold body 16 during compaction.

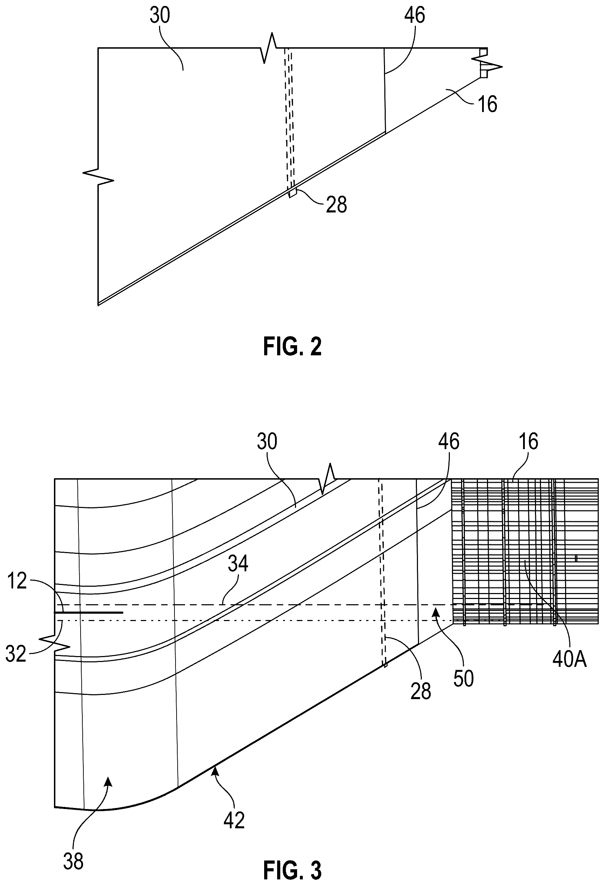

Referring to FIGS. 1 and 2, the mold body 16 has a surface 26 defining a groove 28. In addition, the surface 26 of the mold body 16 includes the first contour profile 18. Generally, any contour profiles 18, 20 of the mold body 16 are spaced from the groove 28.

The mold assembly 10 also includes a permeable layer 30 disposed across the surface 26 of the mold body 16 such that the permeable layer 30 overlaps the groove 28 defined in the surface 26 of the mold body 16. FIGS. 1 and 5 illustrate the groove 28 in evenly spaced dashes to generally indicate the groove 28 under the permeable layer 30. In certain configurations, the groove 28 defined in the surface 26 of the mold body 16 may be formed with various geometries and dimensions. The groove 28 may be linear, arcuate, or comprise a network of interconnected channels, depending on the shape and size of the composite preform 14 to be produced. The cross-sectional profile of the groove 28 can be rectangular, semicircular, V-shaped, or any other suitable form.

The permeable layer 30 acts as a layer that reduces the coefficient of friction. That is, the permeable layer 30 is formed of a material having a first coefficient of friction. Generally, the material of the permeable layer 30 causes this layer to be slippery or slick or any other material to allow sliding relative to the permeable layer 30. The material of the permeable layer 30 may be formed of a fiber-reinforced polymer or any other suitable low-friction permeable material. As non-limiting examples, the fiber-reinforced polymer of the permeable layer 30 may include a fiberglass, a polytetrafluoroethylene (PTFE) glass or any other suitable fiber-reinforced polymer. As one non-limiting example of the PTFE glass includes armalon fabric. In addition, the permeable layer 30 may be formed as a sheet, a film, a membrane, a fabric, etc.

The mold assembly 10 includes a plurality of membranes 32, 34 configured to contain the composite blank material 12 between the membranes 32, 34. That is, the membranes 32, 34 bag the composite blank material 12 for various processes. The membranes 32, 34 are disposed across the permeable layer 30 and the mold body 16. As such, one of the membranes 32, 34 overlaps the permeable layer 30. The membranes 32, 34 are formed of a material having a second coefficient of friction. Generally, the first coefficient of friction of the permeable layer 30 is less than the second coefficient of friction of the membranes 32, 34.

The membranes 32, 34 may be formed of a flexible or deformable material to allow the membranes 32, 34 to lay over various surfaces 26 and allow elongation. Therefore, the membranes 32, 34 may be formed as a sheet, a film, a membrane, etc. The flexible or deformable material of the membranes 32, 34 may include one or more of nylons, urethanes, thermoplastic elastomers, co-polymers, polytetrafluoroethylene (PTFE), etc.

Generally, the composite blank material 12 is bagged between the membranes 32, 34. In certain configurations, the membranes 32, 34 may include a first membrane 32 and a second membrane 34 configured to contain the composite blank material 12. Therefore, the composite blank material 12 is bagged between the first membrane 32 and the second membrane 34. The first membrane 32 is disposed across the permeable layer 30 and the mold body 16, and the second membrane 34 overlaps the composite blank material 12 and overlaps the first membrane 32 beyond the composite blank material 12.

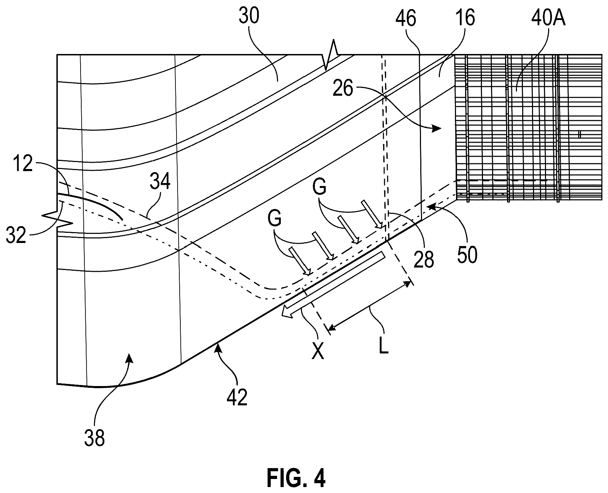

Referring to FIGS. 4 and 5, the bag is vacuumed to compact the composite blank material 12 while maintaining the integrity of the first membrane 32 and the second membrane 34. To do so, the mold assembly 10 also includes a vacuum 36 selectively activated to expel a gaseous fluid out of a space 38 between the mold body 16 and one of the membranes 32, 34 which creates compaction pressure during compaction that causes the membranes 32, 34 to elongate and transform the composite blank material 12 into the composite preform 14. Activating the vacuum 36 removes the gaseous fluid from the space 38 which causes the first membrane 32 and the second membrane 34 to elongate along the surface 26 of the mold body 16 in the direction of arrow X. In other words, a compaction pressure, induced via the vacuum 36, is applied to the membranes 32, 34 which causes the membranes 32, 34 to elongate. As the first membrane 32 and the second membrane 34 elongate, the membranes 32, 34 stick together, and thus, elongate together.

The first membrane 32 and the second membrane 34 may be attached to the surface 26 of the mold body 16 at outer edges 40A, 40B of the mold body 16. In certain configurations, the outer edges 40A, 40B are substantially flat. Once the membranes 32, 34 are attached to the surface 26 at the outer edges 40A, 40B, compaction pressure may be applied. The membranes 32, 34 elongate along a sloped surface 42 of the mold body 16 toward a cavity surface 44 of the mold body 16 in the direction of arrow X. The sloped surface 42 and the cavity surface 44 of the mold body 16 are disposed between the outer edges 40A, 40B of the mold body 16.

Generally, the groove 28 is disposed along the sloped surface 42, and is spaced from the cavity surface 44. The permeable layer 30 is disposed along the sloped surface 42 between the outer edges 40A, 40B of the mold body 16. In certain configurations, the groove 28 is disposed closer to a first one of the outer edges 40A of the mold body 16 than to a second one of the outer edges 40B (opposing the first one of the outer edges 40A) of the mold body 16. More specifically, the groove 28 is disposed along the sloped surface 42 proximal to a first edge 46 of the permeable layer 30 than to a second edge 48 of the permeable layer 30. The first edge 46 and the second edge 48 are disposed along the sloped surface 42, and therefore, as mentioned above, the groove 28 is disposed under the permeable layer 30. The first edge 46 of the permeable layer 30 is disposed between the second edge 48 and the first one of the outer edges 40A of the mold body 16. Additionally, the second edge 48 of the permeable layer 30 is disposed between the first edge 46 and the cavity surface 44 of the mold body 16. As noted above, in certain configurations, the groove 28 defined in the surface 26 of the mold body 16 may be formed with various geometries and dimensions to optimize fluid distribution during the vacuum forming process. The groove 28 may be linear, arcuate, or comprise a network of interconnected channels, depending on the shape and size of the composite preform 14 to be produced. The cross-sectional profile of the groove 28 can be rectangular, semicircular, V-shaped, or any other suitable form that facilitates the controlled injection of fluid from the pump 54 into the space 38. In some embodiments, multiple grooves 28 may be provided in the surface 26 to ensure uniform fluid distribution across complex mold geometries. The depth and width of the groove 28 may be selected based on the required flow rate and the physical properties of the membranes 32, 34 and the permeable layer 30, such that the injected fluid effectively reduces compaction pressure and friction without causing the membrane 32, 34 deformation or leakage.

In addition, a gaseous fluid is expelled out of another area 50 between the first membrane 32 and the second membrane 34. That is, the another area 50 houses the composite blank material 12, i.e., is the area inside of the bag. As such, a vacuum 52 may be activated to expel the gaseous fluid out of the another area 50 between the first membrane 32 and the second membrane 34. The vacuum 52 activated for the another area 50 is a different vacuum 52 from the vacuum 36 activated for the space 38.

Generally, the groove 28 and the space 38 are in fluid communication with each other below the first membrane 32. The mold assembly 10 includes a pump 54 selectively activated to inject a flow of fluid between the permeable layer 30 and one of the membranes 32, 34 (for example, the first membrane 32) via the groove 28 to control the compaction pressure during elongation of the membranes 32, 34 as the gaseous fluid is expelled out of the space 38. The flow of fluid injected into the space 38 via activation of the pump 54 may be a gaseous fluid. Injecting the flow of fluid into the space 38 between the first membrane 32 and the mold body 16 through the permeable layer 30 reduces the compaction pressure, which thus, reduces friction between the membranes 32, 34 and the mold body 16. Therefore, by implementing the flow of fluid via the groove 28 into the space 38, the membranes 32, 34 may elongate farther without reaching the limits of the membranes 32, 34 as compared to not implementing the permeable layer 30 and the flow of fluid, due to the reduction of compaction pressure/friction. In certain configurations, the flow of fluid enters the space 38 along the sloped surface 42 to prevent the membranes 32, 34 from sticking to the permeable layer 30 along the sloped surface 42, which allows for farther elongation of the membranes 32, 34 without reaching the limits of the membranes 32, 34 (as compared to not implementing the permeable layer 30 and the flow of fluid). The flow of fluid may be in direction X of FIG. 4. Compaction pressure is reduced along length L due to the flow of fluid entering the space 38 which allows the membranes 32, 34 to farther slide relative to the permeable layer 30, and thus, prevents the membranes 32, 34 from sticking or sealing in place. Reducing the compaction pressure allows the membranes 32, 34 to elongate an additional distance as compared to not implementing the permeable layer 30 and the flow of fluid.

Therefore, the first membrane 32 and the second membrane 34 continue to elongate until an extended predetermined elongation is reached due to the implementation of the permeable layer 30 and the flow of fluid. The extended predetermined elongation is prior to reaching the limits of the membranes 32, 34, such as prior to tearing or ripping either of the membranes 32, 34. The extended predetermined elongation may be a maximum elongation of the membranes 32, 34 (prior to reaching the limit). Expelling the gaseous fluid out of the space 38 continues until the extended predetermined elongation of the membranes 32, 34 are reached, at which time expelling the gaseous fluid is stopped via the vacuum 36, and then, the vacuum 36 holds a predetermined vacuum level to the membranes 32, 34 to form the first radius 22 over the first contour profile 18. The predetermined vacuum level provides the desired compaction pressure on the composite blank material 12 to form the first radius 22. Maintaining a constant predetermined vacuum level ensures that the profile being formed, i.e., the first radius 22, does not change from the desired configuration.

The predetermined vacuum level is held during a heating process which forms/sets the first radius 22 along the first contour profile 18, and thus, forms/sets any number of radii along the respective contour profiles 18, 20 in this heating process. That is, compaction continues along the first contour profile 18 during the heating process, and compaction continues along the second contour profile 20 if forming a radius thereto, which occurs during the same heating process. The predetermined vacuum level is set prior to the heating process. A heater may be implemented to form and cure/set the profile of the composite preform 14. That is, the heater may heat the composite blank material 12/the composite preform 14 to a predetermined temperature. As non-limiting examples, the heater may be an oven, heating elements incorporated into the mold body 16, or any other suitable heater.

Once the heating process is completed, i.e., the composite preform 14 is cured, the composite preform 14 is cooled. During the cooling process, the predetermined vacuum level remains held. The temperature of the heater may be reduced and/or the heater may be turned off to cool the composite preform 14.

The predetermined vacuum level is released after cooling the composite preform 14. That is, the vacuum 36 is deactivated to stop expelling the gaseous fluid from the space 38 after the composite preform 14 is cooled. Then, the composite preform 14, with the first radius 22 (or any additional radii) of the complex geometry, is removed from the mold body 16.

A controller 56 (see FIG. 5) is in communication with the pump 54, the heaters, if more than one heater is being implemented, and each of the vacuums 36, 52, if more than one vacuum 36, 52 is being implemented, to control heat, cooling, and compaction pressure. For example, one or more sensors 58 may be coupled to the pump 54, the heater, the vacuum 36, 52, the mold body 16, etc., to monitor temperature, compaction pressure, etc. It is to be appreciated that the controller 56 is omitted in some of the figures, but the controller 56 would be in communication with the various components in those figures as well to control the pump 54, the heaters, and the vacuums 36, 52 as described herein. Optionally, the groove 28 may be connected to the one or more sensors 58 to monitor fluid flow and pressure, allowing the controller 56 to dynamically adjust the operation of the pump 54 for optimal process control.

The controller 56 is configured to execute the instructions from memory M, via a processor P. For example, the controller 56 may be a host machine or distributed system, e.g., a computer such as a digital computer or microcomputer, and, as the memory M, tangible, non-transitory computer-readable memory such as read-only memory (ROM) or flash memory. The controller 56 may also have random access memory (RAM), electrically erasable programmable read-only memory (EEPROM), a high-speed clock, analog-to-digital (A/D) and/or digital-to-analog (D/A) circuitry, and any required input/output circuitry and associated devices, as well as any required signal conditioning and/or signal buffering circuitry. Therefore, the controller 56 may include all software, hardware, memory M, algorithms, connections, sensors 58, etc., necessary to control, for example, the pump 54, the heaters, and the vacuums 36, 52. As such, a control method operative to control the pump 54, the heaters, and the vacuums 36, 52, may be embodied as software or firmware associated with the controller 56. It is to be appreciated that the controller 56 may also include any device capable of analyzing data from various sensors 58, devices, comparing data, making the necessary decisions required to control and/or monitor the pump 54, the heaters, and the vacuums 36, 52. Optionally, more than one controller 56 may be implemented, and if a plurality of controller 56 are implemented, each of the controllers 56 may communicate with each other.

The predetermined temperature, the extended predetermined elongation, and the predetermined vacuum level referred to herein may be any suitable value based on one or more of engineering parameters, government parameters, design parameters, manufacturing parameters, specification parameters, etc.

The present disclosure also provides a method of elongating the membranes 32, 34 of the mold assembly 10 for the vacuum forming process. The mold body 16 is implemented to transform the composite blank material 12 into the composite preform 14. Therefore, the method improves manufacturing processes of forming the composite preform 14. For example, the method described herein allows significant membrane elongation to allow the formation of complex composite preforms 14.

Referring to FIG. 1, the mold body 16 is set up with the permeable layer 30 disposed across at least part of the mold body 16. The permeable layer 30 is disposed across the surface 26 of the mold body 16 such that the permeable layer 30 overlaps the groove 28 defined in the surface 26 of the mold body 16. In certain configurations, disposing the permeable layer 30 across the surface 26 of the mold body 16 further includes attaching the permeable layer 30 to the mold body 16 such that the permeable layer 30 overlaps the groove 28.

Referring to FIG. 3, the membranes 32, 34 and the composite blank material 12 are disposed on the mold body 16. Specifically, the composite blank material 12 is contained between the membranes 32, 34. In certain configurations, containing the composite blank material 12 between the membranes 32, 34 further includes containing the composite blank material 12 between the first membrane 32 and the second membrane 34. That is, the composite blank material 12 is bagged via the membranes 32, 34.

The membranes 32, 34 are disposed across the permeable layer 30 and the mold body 16, with the composite blank material 12 between the membranes 32, 34. To do so, the first membrane 32 is disposed across the permeable layer 30 and the mold body 16, and the first membrane 32 is attached to the mold body 16 beyond the permeable layer 30. The first membrane 32 is attached to the mold body 16 to seal the first membrane 32 to the mold body 16 to prevent gaseous fluid leaks therebetween. Then, the composite blank material 12 is disposed on the first membrane 32 relative to the contour profiles 18, 20 of the mold body 16. More specifically, the first membrane 32 is attached to the mold body 16 beyond both of the permeable layer 30 and the composite blank material 12.

Next, the second membrane 34 is disposed over the composite blank material 12 and the first membrane 32. The second membrane 34 is attached to the mold body 16 beyond the permeable layer 30, and attached to the mold body 16 beyond the composite blank material 12 and the first membrane 32. The second membrane 34 is attached to the mold body 16 to seal the second membrane 34 to the mold body 16 to prevent gaseous fluid leaks therebetween.

Next, the vacuum 36 is activated to expel the gaseous fluid out of the space 38 between the mold body 16 and one of the membranes 32, 34 which creates compaction pressure during compaction that causes the membranes 32, 34 to elongate and transform the composite blank material 12 into the composite preform 14. Generally, expelling the gaseous fluid out of the space 38 between the mold body 16 and one of the membranes 32, 34 occurs after attaching the first membrane 32 and the second membrane 34 to the mold body 16. Referring to FIG. 4, the vacuum 36 has begun expelling the gaseous fluid out of the space 38 in which the membranes 32, 34 are beginning to elongate.

In addition, the other vacuum 52 is activated to expel gaseous fluid out of the area between the first membrane 32 and the second membrane 34. That is, gaseous fluid is expelled out of the area inside of the bag as well. Expelling the gaseous fluid out of the space 38 and the area may occur at the same time or in any suitable order.

While the vacuum 36 expels the gaseous fluid out of the space 38, the pump 54 is activated to reduce the compaction pressure along the permeable layer 30 to extend elongation of the membranes 32, 34. Specifically, the pump 54 is activated to inject the flow of fluid between the permeable layer 30 and one of the membranes 32, 34 via the groove 28 to control the compaction pressure during elongation of the membranes 32, 34 as the gaseous fluid is expelled out of the space 38. The flow of fluid enters the space 38 to reduce the compaction pressure along the permeable layer 30, which thus, reduces friction between the membranes 32, 34 and the mold body 16, to extend elongation of the membranes 32, 34 (arrow G generally indicates the reduced compaction pressure zone in FIGS. 4 and 5). Generally, activating the pump 54 to inject the flow of fluid between the permeable layer 30 and one of the membranes 32, 34 occurs before the membranes 32, 34 adhere to the surface 26 of the mold body 16 beyond the groove 28. Arrow X of FIG. 4 indicates that the flow of fluid entering the space 38 to prevent the membranes 32, 34 from adhering or sticking to the permeable layer 30 and/or the surface 26 of the mold body 16 during elongation of the membranes 32, 34. The membranes 32, 34 continue to elongate along the surface 26 of the mold body 16 during activation of the vacuum 36 that expels the gaseous fluid out of the space 38. Referring to FIG. 5, arrows P generally illustrates the normal compaction pressure zones, and arrows G generally illustrate the reduced compaction pressure zone.

A predetermined amount of the gaseous fluid is removed from the space 38 during activation of the vacuum 36, and a predetermined amount of the flow of fluid is injected into the space 38 during activation of the pump 54. Generally, the predetermined amount of the gaseous fluid removed from the space 38 is greater than the predetermined amount of the flow of fluid injected into the space 38. The flow of fluid entering the space 38 via the groove 28 is monitored, and additionally, the gaseous fluid removed from the space 38 is monitored. Therefore, the controller 56 may be in communication with the pump 54 (and/or any sensor 58 to monitor the flow of the fluid) to monitor the flow of fluid and the controller 56 may be in communication with the vacuum 36 (and/or any sensor 58 to monitor the gaseous fluid being removed) to monitor the removed gaseous fluid.

Generally, the pump 54 is deactivated to stop the flow of fluid entering the space 38 via the groove 28 when the membranes 32, 34 elongate beyond the permeable layer 30. More specifically, once the membranes 32, 34 reach the extended predetermined elongation, the pump 54 is deactivated and the flow of fluid stops. The gaseous fluid is expelled out of the space 38 to obtain full compaction pressure to complete transformation of the composite blank material 12 to the composite preform 14. FIG. 5 illustrates the membranes 32, 34 in the extended predetermined elongation and full compaction pressure obtained to form the first radius 22, or form any number of radii, of the composite preform 14 at this point. That is, transformation of the composite blank material 12 into the composite preform 14 forms each of the radii relative to the respective contour profiles 18, 20 of the mold body 16 during compaction.

Heat may be applied during full compaction pressure, via the heater. The controller 56 may control activation of the heater as well as the amount of heat being applied. The predetermined vacuum level is held during the heating process which forms/sets each of the radii along the respective contour profiles 18, 20 of the mold body 16, i.e., the first radius 22 along the first contour profile 18 and another radius along the second contour profile 20 if this radius is desired. That is, compaction continues along the respective contour profiles 18, 20, including the first contour profile 18 and the second contour profile 20 if a radius is desired relative to the second contour profile 20, during the heating process. The predetermined vacuum level is set prior to the heating process.

Once the heating process is completed, i.e., the composite preform 14 is cured, the composite preform 14 is cooled. During the cooling process, the predetermined vacuum level remains held. The temperature of the heater may be reduced and/or the heater may be turned off to cool the composite preform 14.

The predetermined vacuum level is released after cooling the composite preform 14. That is, the vacuum 36 is deactivated to stop expelling the gaseous fluid from the space 38 after the composite preform 14 is cooled. That is, the vacuum 36 is deactivated to stop flow of the gaseous fluid out of the space 38 after transforming the composite blank material 12 to the composite preform 14. Then, the completed composite preform 14, with the first radius 22 (or any additional radii) of the complex geometry, is removed from the mold body 16.

Once the completed composite preform 14 is removed from the mold body 16, the mold body 16 with the permeable layer 30 attached thereto may be reused for another forming process to transform a new composite blank material into a new composite preform. Alternatively, optionally, the previously used permeable layer 30 may be replaced with a new permeable layer before starting another forming process for another new composite blank material.

It is to be appreciated that the order or sequence of performing the method as described above is for illustrative purposes and other orders or sequences are within the scope of the present teachings. It is to also be appreciated that the method may include other features not specifically described immediately above.

While the best modes and other configurations for carrying out the disclosure have been described in detail, those familiar with the art to which this disclosure relates will recognize various alternative designs and configurations for practicing the disclosure within the scope of the appended claims. Furthermore, the configurations shown in the drawings or the characteristics of various configurations mentioned in the present description are not necessarily to be understood as configurations independent of each other. Rather, it is possible that each of the characteristics described in one of the examples of a configuration can be combined with one or a plurality of other desired characteristics from other configurations, resulting in other configurations not described in words or by reference to the drawings. Accordingly, such other configurations fall within the framework of the scope of the appended claims.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The following Clauses provide some example configurations of the mold assembly 10 and the method as disclosed herein.

Clause 1: A method of elongating membranes of a mold assembly for a vacuum forming process, the method comprising: disposing a permeable layer across a surface of a mold body such that the permeable layer overlaps a groove defined in the surface of the mold body, wherein the mold body transforms a composite blank material into a composite preform; containing the composite blank material between the membranes, wherein the membranes are disposed across the permeable layer and the mold body; activating a vacuum to expel a gaseous fluid out of a space between the mold body and one of the membranes which creates compaction pressure during compaction that causes the membranes to elongate and transform the composite blank material into the composite preform; and activating a pump to inject a flow of fluid between the permeable layer and one of the membranes via the groove to control the compaction pressure during elongation of the membranes as the gaseous fluid is expelled out of the space.

Clause 2: The method as set forth in clause 1 wherein disposing the permeable layer across the surface of the mold body further comprises attaching the permeable layer to the mold body such that the permeable layer overlaps the groove.

Clause 3: The method as set forth in clause 1 or 2: wherein the membranes include a first membrane and a second membrane that contains the composite blank material; wherein disposing the membranes across the permeable layer and the mold body further comprises disposing the first membrane across the permeable layer and the mold body; and further comprising attaching the first membrane to the mold body beyond the permeable layer.

Clause 4: The method as set forth in clause 3 wherein containing the composite blank material between the membranes further comprises containing the composite blank material between the first membrane and the second membrane.

Clause 5: The method as set forth in clause 3 or 4 further comprising attaching the second membrane to the mold body beyond the permeable layer.

Clause 6: The method as set forth in one of clauses 3-5 wherein attaching the second membrane to the mold body beyond the permeable layer further comprises attaching the second membrane to the mold body beyond the composite blank material and the first membrane.

Clause 7: The method as set forth in one of clauses 3-6 wherein expelling the gaseous fluid out of the space between the mold body and one of the membranes occurs after attaching the first membrane and the second membrane to the mold body.

Clause 8: The method as set forth in any one of the preceding clauses: wherein the space and the groove are in fluid communication with each other; and wherein activating the pump to inject the flow of fluid between the permeable layer and one of the membranes occurs before the membranes adhere to the surface of the mold body beyond the groove.

Clause 9: The method as set forth in any one of the preceding clauses wherein the membranes continue to elongate along the surface of the mold body during activation of the vacuum that expels the gaseous fluid out of the space.

Clause 10: The method as set forth in any one of the preceding clauses wherein: the surface of the mold body includes a first contour profile; and transformation of the composite blank material into the composite preform forms at least one radius relative to the first contour profile of the mold body during compaction.

Clause 11: The method as set forth in any one of the preceding clauses: wherein the membranes include a first membrane and a second membrane that contains the composite blank material; and further comprising activating a vacuum to expel gaseous fluid out of an area between the first membrane and the second membrane.

Clause 12: The method as set forth in any one of the preceding clauses further comprising monitoring the flow of fluid entering the space via the groove.

Clause 13: The method as set forth in any one of the preceding clauses: wherein a predetermined amount of the gaseous fluid is removed from the space during activation of the vacuum; wherein a predetermined amount of the flow of fluid is injected into the space during activation of the pump; and wherein the predetermined amount of the gaseous fluid removed from the space is greater than the predetermined amount of the flow of fluid injected into the space.

Clause 14: The method as set forth in any one of the preceding clauses further comprising deactivating the pump to stop the flow of fluid entering the space via the groove when the membranes elongate beyond the permeable layer.

Clause 15: The method as set forth in any one of the preceding clauses wherein activating the vacuum to expel the gaseous fluid out of the space further comprises expelling the gaseous fluid out of the space to obtain full compaction pressure to complete transformation of the composite blank material to the composite preform.

Clause 16: The method as set forth in any one of the preceding clauses further comprising: deactivating the vacuum to stop flow of the gaseous fluid out of the space after transforming the composite blank material to the composite preform; and removing the completed composite preform from the membranes.

Clause 17: A mold assembly for a vacuum forming process that transforms a composite blank material into a composite preform, the mold assembly comprising: a mold body having a surface defining a groove; a permeable layer disposed across the surface of the mold body such that the permeable layer overlaps the groove defined in the surface of the mold body; a plurality of membranes configured to contain the composite blank material between the membranes, wherein the membranes are disposed across the permeable layer and the mold body; a vacuum selectively activated to expel a gaseous fluid out of a space between the mold body and one of the membranes which creates compaction pressure during compaction that causes the membranes to elongate and transform the composite blank material into the composite preform; and a pump selectively activated to inject a flow of fluid between the permeable layer and one of the membranes via the groove to control the compaction pressure during elongation of the membranes as the gaseous fluid is expelled out of the space.

Clause 18: The mold assembly as set forth in clause 17 wherein: the membranes include a first membrane and a second membrane configured to contain the composite blank material; and the first membrane is disposed across the permeable layer and the mold body.

Clause 19: The mold assembly as set forth in clause 17 or 18 wherein the groove and the space are in fluid communication with each other below the first membrane.

Clause 20: The mold assembly as set forth in any one of clauses 17-19 wherein: the permeable layer is formed of a material having a first coefficient of friction; the membranes are formed of a material having a second coefficient of friction; and the first coefficient of friction is less than the second coefficient of friction.

## Claims

1. A method of elongating membranes (32, 34) of a mold assembly (10) for a vacuum forming process, the method comprising:
disposing a permeable layer (30) across a surface (26) of a mold body (16) such that the permeable layer (30) overlaps a groove (28) defined in the surface (26) of the mold body (16), wherein the mold body (16) transforms a composite blank material (12) into a composite preform (14);
containing the composite blank material (12) between the membranes (32, 34), wherein the membranes (32, 34) are disposed across the permeable layer (30) and the mold body (16);
activating a vacuum (36) to expel a gaseous fluid out of a space (38) between the mold body (16) and one of the membranes (32, 34) which creates compaction pressure during compaction that causes the membranes (32, 34) to elongate and transform the composite blank material (12) into the composite preform (14); and
activating a pump (54) to inject a flow of fluid between the permeable layer (30) and one of the membranes (32, 34) via the groove (28) to control the compaction pressure during elongation of the membranes (32, 34) as the gaseous fluid is expelled out of the space (38).

2. The method according to claim 1, wherein disposing the permeable layer (30) across the surface (26) of the mold body (16) further comprises:
attaching the permeable layer (30) to the mold body (16) such that the permeable layer (30) overlaps the groove (28).

3. The method according to claim 1 or 2, wherein the membranes (32, 34) comprise a first membrane (32) and a second membrane (34) that contains the composite blank material (12);
wherein disposing the membranes (32, 34) across the permeable layer (30) and the mold body (16) further comprises:
disposing the first membrane (32) across the permeable layer (30) and the mold body (16);
attaching the first membrane (32) to the mold body (16) beyond the permeable layer (30); and
attaching the second membrane (34) to the mold body (16) beyond the permeable layer (30).

4. The method according to claim 3, wherein containing the composite blank material (12) between the membranes (32, 34) further comprises:
containing the composite blank material (12) between the first membrane (32) and the second membrane (34).

5. The method according to claim 3 or 4, wherein attaching the second membrane (34) to the mold body (16) beyond the permeable layer (30) further comprises:
attaching the second membrane (34) to the mold body (16) beyond the composite blank material (12) and the first membrane (32).

6. The method according to any one of claims 1 to 5, wherein the space (38) and the groove (28) are in fluid communication with each other; and
wherein activating the pump (54) to inject the flow of fluid between the permeable layer (30) and one of the membranes (32, 34) occurs before the membranes (32, 34) adhere to the surface (26) of the mold body (16) beyond the groove (28).

7. The method according to any one of claims 1 to 6, wherein the membranes (32, 34) continue to elongate along the surface (26) of the mold body (16) during activation of the vacuum (36) that expels the gaseous fluid out of the space (38).

8. The method according to any one of claims 1 to 7, wherein the membranes (32, 34) comprise a first membrane (32) and a second membrane (34) that contains the composite blank material (12); and
wherein the method further comprises activating a vacuum (52) to expel gaseous fluid out of an area (50) between the first membrane (32) and the second membrane (34).

9. The method according to any one of claims 1 to 8, wherein a predetermined amount of the gaseous fluid is removed from the space (38) during activation of the vacuum (36);
wherein a predetermined amount of the flow of fluid is injected into the space (38) during activation of the pump (54); and
wherein the predetermined amount of the gaseous fluid removed from the space (38) is greater than the predetermined amount of the flow of fluid injected into the space (38).

10. The method according to any one of claims 1 to 9, further comprising:
deactivating the pump (54) to stop the flow of fluid entering the space (38) via the groove (28) when the membranes (32, 34) elongate beyond the permeable layer (30).

11. The method according to any one of claims 1 to 10, further comprising:
deactivating the vacuum (36) to stop flow of the gaseous fluid out of the space (38) after transforming the composite blank material (12) to the composite preform (14); and
removing the completed composite preform (14) from the membranes (32, 34).

12. A mold assembly (10) for a vacuum forming process that transforms a composite blank material (12) into a composite preform (14), the mold assembly (10) comprising:
a mold body (16) having a surface (26) defining a groove (28);
a permeable layer (30) disposed across the surface (26) of the mold body (16) such that the permeable layer (30) overlaps the groove (28) defined in the surface (26) of the mold body (16);
a plurality of membranes (32, 34) configured to contain the composite blank material (12) between the membranes (32, 34), wherein the membranes (32, 34) are disposed across the permeable layer (30) and the mold body (16);
a vacuum (36) configured to be selectively activated to expel a gaseous fluid out of a space (38) between the mold body (16) and one of the membranes (32, 34) which creates compaction pressure during compaction that causes the membranes (32, 34) to elongate and transform the composite blank material (12) into the composite preform (14); and
a pump (54) configured to be selectively activated to inject a flow of fluid between the permeable layer (30) and one of the membranes (32, 34) via the groove (28) to control the compaction pressure during elongation of the membranes (32, 34) as the gaseous fluid is expelled out of the space (38).

13. The mold assembly (10) according to claim 12, wherein:
the membranes (32, 34) include a first membrane (32) and a second membrane (34) configured to contain the composite blank material (12); and
the first membrane (32) is disposed across the permeable layer (30) and the mold body (16).

14. The mold assembly (10) according to claim 13, wherein the groove (28) and the space (38) are in fluid communication with each other below the first membrane (32).

15. The mold assembly (10) according to any one of claims 12 to 14, wherein:
the permeable layer (30) is formed of a material having a first coefficient of friction;
the membranes (32, 34) are formed of a material having a second coefficient of friction; and
the first coefficient of friction is less than the second coefficient of friction.
